# EUROPEAN PATENT SPECIFICATION

(11) **EP 2 128 229 B1**
(45) Date of publication and mention of the grant of the patent: **30.11.2016**
(21) Application number: 08711475.7
(22) Date of filing: 18.02.2008
(51) Int. Cl.: C10M 105/38, C09K 5/04, C10N 30/00, C10N 40/30

(54) **REFRIGERATOR OIL AND WORKING FLUID COMPOSITION FOR REFRIGERATOR**
KÜHLSCHRANKÖL UND ARBEITSFLUIDZUSAMMENSETZUNG FÜR KÜHLSCHRANK
HUILE POUR MACHINES FRIGORIFIQUES ET COMPOSITION DE FLUIDE MOTEUR POUR MACHINES FRIGORIFIQUES

(30) Priority: 27.02.2007 JP 2007047592; 28.08.2007 JP 2007221526; 29.10.2007 JP 2007280601
(43) Date of publication of application: 02.12.2009
(73) Proprietor: JX Nippon Oil & Energy Corporation, Chiyoda-ku Tokyo 100-8162 (JP)
(72) Inventor: SHIMOMURA, Yuji, Yokohama-shi Kanagawa 231-0815 (JP); TAKIGAWA, Katsuya, Yokohama-shi Kanagawa 231-0815 (JP)
(74) Representative: Grünecker Patent- und Rechtsanwälte PartG mbB
(86) International application number: PCT/JP2008/052651
(87) International publication number: WO 2008/105256

(56) References cited:
- WO-A1-2005/042663
- WO-A1-2005/085402
- WO-A1-2005/085402
- WO-A2-2005/103191
- WO-A2-2006/069362
- JP-A- 09 169 991
- JP-A- 2001 506 672
- JP-A- 2006 512 426
- US-A1- 2006 243 944

## Description

### Technical Field

The present invention relates to a working fluid composition for a refrigerating machine.

### Background Art

In light of the problem of ozone layer depletion which is of note in recent years, the restrictions on CFCs (chlorofluorocarbons) and HCFCs (hydrochlorofluorocarbons) that have been used as refrigerants in conventional refrigerating machines have become more stringent, and HFCs (hydrofluorocarbons) are coming into use as substitute refrigerants.

Hydrocarbon oils such as mineral oils or alkylbenzene have been preferred for use as refrigerating machine oils when CFCs or HCFCs are the refrigerants, but since changing the refrigerant can cause the refrigerating machine oil used with it to exhibit unpredictable behavior in terms of its compatibility with the refrigerant, lubricity, dissolved viscosity with the refrigerant and thermal/chemical stability, it has been necessary to develop different refrigerating machine oils for different refrigerants. Examples of refrigerating machine oils that have been developed for HFC refrigerants include polyalkylene glycols (see Patent document 1), esters (see Patent document 2), carbonic acid esters (see Patent document 3) and polyvinyl ethers (see Patent document 4).

HFC-134a is an HFC refrigerant that is routinely used as a refrigerant for automobile air conditioners, and while it has an ozone depletion potential (ODP) of zero, its high global warming potential (GWP) has led to its restriction in Europe. It has therefore become an urgent issue to develop refrigerants that can be used as substitutes for HFC-134a.

In light of this background it has been proposed to use, as substitute refrigerants for HFC-134a, fluoropropene refrigerants which have very low ODP and GWP, are nonflammable and are comparable or superior to HFC-134a in terms of their thermodynamic properties, as a measure of refrigerant performance. There has also been proposed the use of refrigerant mixtures of fluoropropene with saturated hydrofluorocarbons, saturated hydrocarbons having from 3 to 5 carbon atoms in the molecule, dimethyl ether, carbon dioxide, bis(trifluoromethyl)sulfide or trifluoroiodomethane (see Patent document 5).

Also, there have been proposed refrigerating machine oils that employ mineral oils, alkylbenzenes, poly α-olefins, polyalkyleneglycols, monoesters, diesters, polyol esters, phthalic acid esters, alkyl ethers, ketones, carbonic acid esters, polyvinyl ethers and the like, as refrigerating machine oils that can be used with fluoropropene refrigerants or refrigerant mixtures of fluoropropene and saturated hydrofluorocarbon, saturated hydrocarbon having from 3 to 5 carbon atoms in the molecule, dimethyl ether, carbon dioxide, bis(trifluoromethyl)sulfide or trifluoroiodomethane (see Patent document 5 and Patent documents 6 and 7).
[Patent document 1] Japanese Unexamined Patent Publication HEI No. 02-242888
[Patent document 2] Japanese Unexamined Patent Publication HEI No. 03-200895
[Patent document 3] Japanese Unexamined Patent Publication HEI No. 03-217495
[Patent document 4] Japanese Unexamined Patent Publication HEI No. 06-128578
[Patent document 5] International Publication No. WO2006/094303 Pamphlet
[Patent document 6] Japanese Patent Public Inspection No. 2006-512426
[Patent document 7] International Publication No. WO2005/103190 Pamphlet

WO2005/085402 discloses a refrigerating machine oil composition comprising a hydrofluorocarbon (HFC) refrigerant.

US2006/243944 discloses refrigerant compositions comprising fluoroolefines and further common additives, such as commercial POE lubricant oils.

### Disclosure of the Invention

### Problems to be Solved by the Invention

In a refrigeration system employing a fluoropropene refrigerant and/or a trifluoroiodomethane refrigerant, as described in Patent documents 5, 6 and 7, the refrigerating machine oil employed may be an alkylbenzene such as a mineral oil or a hydrocarbon which is used in CFCs or HCFCs or a polyalkylene glycols, polyol esters or polyvinyl ethers which is used in HFCs. Based on investigation by the present inventors, however, it is not possible to achieve a high level of refrigerant compatibility and thermal/chemical stability by simply applying conventional refrigerating machine oils used for refrigerants such as CFCs and HCFCs in the systems mentioned above.

### Brief Description of the Drawings

It is therefore an object of the present invention, which has been accomplished in light of these circumstances, to provide a working fluid composition for a refrigerating machine, which can achieve a high level of both refrigerant compatibility and thermal/chemical stability in refrigeration systems employing fluoropropene refrigerants and/or a trifluoroiodomethane refrigerants.

### Means for Solving the Problems

As a result of much diligent research directed toward achieving the object stated above, the present inventors have found that by using an ester of a specific polyhydric alcohol, having a specific fatty acid composition, it is possible to obtain a refrigerating machine oil having sufficient thermal and chemical stability in the co-presence of a fluoropropene refrigerant and/or a trifluoroiodomethane refrigerant, while also having sufficient compatibility with refrigerants, and the invention has been completed upon this finding.

Specifically, the invention provides a working fluid composition for a refrigerating machine characterized by comprising an ester of a polyhydric alcohol and a fatty acid with a C₅-C₉ fatty acid content of 50-100 mol%, a C₅-C₉ branched fatty acid content of at least 30 mol% and a C₅ or lower straight-chain fatty acid content of no greater than 40 mol%, and a fluoropropene refrigerant and/or a trifluoroiodomethane refrigerant.

The invention further provides use of a composition as a refrigerating machine oil in combination with a fluoropropene refrigerant and/or a trifluoroiodomethane refrigerant, the composition comprising an ester of a polyhydric alcohol and a fatty acid with a C₅-C₉ fatty acid content of 50-100 mol%, a C₅-C₉ branched fatty acid content of at least 30 mol% and a C₅ or lower straight-chain fatty acid content of no greater than 40 mol%.

Preferred embodiments of the present invention are set forth in the dependent claims.

The working fluid composition for a refrigerating machine of the invention also preferably contains at least one fluoropropene refrigerant (hereinafter referred to as "refrigerant (A)") and at least one component selected from among saturated hydrofluorocarbons, hydrocarbons having from 3 to 5 carbon atoms in the molecule, dimethyl ether, carbon dioxide, bis(trifluoromethyl)sulfide and trifluoroiodomethane refrigerants (hereinafter referred to as "refrigerant (B)").

In a refrigerant mixture comprising refrigerant (A) and refrigerant (B), the fluoropropene refrigerant is preferably at least one selected from among 1,2,3,3,3-pentafluoropropene, 1,3,3,3-tetrafluoropropene, 2,3,3,3-tetrafluoropropene, 1,2,3,3-tetrafluoropropene and 3,3,3-trifluoropropene, the saturated hydrofluorocarbon is preferably at least one selected from among difluoromethane, pentafluoroethane, 1,1,2,2-tetrafluoroethane, 1,1,1,2-tetrafluoroethane, 1,1-difluoroethane, fluoroethane, 1,1,1,2,3,3,3-heptafluoropropane, 1,1,1,2,3,3-hexafluoropropane, 1,1,1,3,3,3-hexafluoropropane, 1,1,1,3,3-pentafluoropropane and 1,1,1,3,3-pentafluorobutane, and the hydrocarbon having from 3 to 5 carbon atoms in the molecule refrigerant is preferably at least one selected from among propane, *n*-butane, isobutane, 2-methylbutane and *n*-pentane.

### Effect of the Invention

As mentioned above, the present invention can provide a working fluid composition for a refrigerating machine, which can achieve a high level of both refrigerant compatibility and thermal/chemical stability in refrigeration systems employing fluoropropene refrigerants and/or trifluoroiodomethane refrigerants.

### Best Modes for Carrying Out the Invention

Preferred embodiments of the invention will now be described in detail.

The working fluid composition for a refrigerating machine according to the invention is characterized by comprising an ester of a polyhydric alcohol and a fatty acid with a C₅-C₉ fatty acid content of 50-100 mol%, a C₅-C₉ branched fatty acid content of at least 30 mol% and a C₅ or lower straight-chain fatty acid content of no greater than 40 mol%, and a fluoropropene refrigerant and/or a trifluoroiodomethane refrigerant.

The working fluid composition for a refrigerating machine according to the invention comprises an ester of a polyhydric alcohol and a fatty acid with a C₅-C₉ fatty acid content of 50-100 mol%, a C₅-C₉ branched fatty acid content of at least 30 mol% and a C₅ or lower straight-chain fatty acid content of no greater than 40 mol% (hereinafter referred to as "polyol ester of the invention").

The proportion of C₅-C₉ fatty acids in the fatty acid of the polyol ester of the invention (hereinafter referred to as "constituent fatty acid") is 50-100 mol% as mentioned above, but it is preferably 60-100 mol%, more preferably 70-100 mol%, even more preferably 90-100 mol% and most preferably 100 mol%. If the C₅-C₉ fatty acid content is less than 50 mol%, the thermal/chemical stability and/or the refrigerant compatibility will be insufficient in the copresence of a fluoropropene refrigerant and/or a trifluoroiodomethane refrigerant.

The C₅-C₉ branched fatty acid content of the constituent fatty acid is at least 30 mol% as mentioned above, and is preferably at least 40 mol%. If the C₅-C₉ branched fatty acid content is less than 30 mol%, the thermal/chemical stability and/or the refrigerant compatibility will be insufficient in the copresence of a fluoropropene refrigerant and/or a trifluoroiodomethane refrigerant.

The C₅ or lower straight-chain fatty acid content of the constituent fatty acid is no greater than 40 mol% as mentioned above, and is preferably no greater than 30 mol%. If the C₅ or lower straight-chain fatty acid content is greater than 40 mol%, the thermal/chemical stability and/or the refrigerant compatibility will be insufficient in the copresence of a fluoropropene refrigerant and/or a trifluoroiodomethane refrigerant.

So long as the aforementioned conditions for the C₅-C₉ fatty acid, C₅-C₉ branched fatty acid and C₅ or lower straight-chain fatty acid contents of the constituent fatty acid are satisfied, the constituent fatty acid may include only branched fatty acids, or it may be a mixture of straight-chain fatty acids and branched fatty acids.

The C₅-C₉ fatty acids may be straight-chain or branched, and as specific C₅-C₉ straight-chain fatty acids there may be mentioned pentanoic acid, hexanoic acid, heptanoic acid, octanoic acid and nonanoic acid.

As specific C₅-C₉ branched fatty acids there may be mentioned branched pentanoic acid, branched hexanoic acid, branched heptanoic acid, branched octanoic acid and branched nonanoic acid. More specifically, fatty acids branched at the α- and/or β-position are preferred, with 2-methylbutanoic acid, 2-methylpentanoic acid, 2-methylhexanoic acid, 2-ethylpentanoic acid, 2-methylheptanoic acid, 2-ethylhexanoic acid and 3,5,5-trimethylhexanoic acid being especially preferred and mixtures of 2-ethylhexanoic acid and 3,5,5-trimethylhexanoic acid being most preferred.

As examples of fatty acids other than C₅-C₉ fatty acids to be included in the constituent fatty acid there may be mentioned C₁₀-C₂₄ straight-chain fatty acids and C₁₀-C₂₄ branched fatty acids. More specifically, there may be mentioned straight-chain or branched decanoic acid, straight-chain or branched undecanoic acid, straight-chain or branched dodecanoic acid, straight-chain or branched tridecanoic acid, straight-chain or branched tetradecanoic acid, straight-chain or branched pentadecanoic acid, straight-chain or branched hexadecanoic acid, straight-chain or branched heptadecanoic acid, straight-chain or branched octadecanoic acid, straight-chain or branched nonadecanoic acid, straight-chain or branched eicosanoic acid, straight-chain or branched heneicosanoic acid, straight-chain or branched docosanoic acid, straight-chain or branched tricosanoic acid and straight-chain or branched tetracosanoic acid.

The polyhydric alcohol composing the polyol ester of the invention is preferably a polyhydric alcohol with 2-6 hydroxyl groups.

As specific examples of dihydric alcohols (diols) there may be mentioned ethylene glycol, 1,3-propanediol, propylene glycol, 1,4-butanediol, 1,2-butanediol, 2-methyl-1,3-propanediol, 1,5-pentanediol, neopentyl glycol, 1,6-hexanediol, 2-ethyl-2-methyl-1,3-propanediol, 1,7-heptanediol, 2-methyl-2-propyl-1,3-propanediol, 2,2-diethyl-1,3-propanediol, 1,8-octanediol, 1,9-nonanediol, 1,10-decanediol, 1,11-undecanediol, and 1,12-dodecanediol. As specific examples of trihydric and greater alcohols there may be mentioned polyhydric alcohols such as trimethylolethane, trimethylolpropane, trimethylolbutane, di-(trimethylolpropane), tri-(trimethylolpropane), pentaerythritol, di-(pentaerythritol), tri-(pentaerythritol), glycerin, polyglycerin (glycerin 2-3mers), 1,3,5-pentanetriol, sorbitol, sorbitan, sorbitolglycerin condensation products, adonitol, arabitol, xylitol, and mannitol, saccharides such as xylose, arabinose, ribose, rhamnose, glucose, fructose, galactose, mannose, sorbose and cellobiose, and partial etherified forms thereof. Of these, esters of hindered alcohols such as neopentyl glycol, trimethylolethane, trimethylolpropane, trimethylolbutane, di-(trimethylolpropane), tri-(trimethylolpropane), pentaerythritol, di-(pentaerythritol) and tri-(pentaerythritol) are preferred, esters of neopentyl glycol, trimethylolethane, trimethylolpropane, trimethylolbutane, pentaerythritol and di-(pentaerythritol) are more preferred and neopentyl glycol, trimethylolpropane, pentaerythritol and di-(pentaerythritol) are yet more preferred for more excellent hydrolytic stability, while pentaerythritol or mixed esters of pentaerythritol and di-(pentaerythritol) are most preferred for particularly excellent compatibility with refrigerants and hydrolytic stability.

As more specific examples, the polyol ester of the invention is preferably an ester of one or more fatty acids selected from among 2-methylhexanoic acid, 2-ethylpentanoic acid, 2-methylheptanoic acid, 2-ethylhexanoic acid and 3,5,5-trimethylhexanoic acid as branched fatty acids with one or more polyhydric alcohols selected from among neopentyl glycol, trimethylolethane, trimethylolpropane, trimethylolbutane, pentaerythritol and di-(pentaerythritol), more preferably an ester of a branched fatty acid such as 2-ethylhexanoic acid and/or 3,5,5-trimethylhexanoic acid with one or more polyhydric alcohols selected from among neopentyl glycol, trimethylolpropane, pentaerythritol and di-(pentaerythritol), and most preferably an ester of a mixed fatty acid comprising 2-ethylhexanoic acid and 3,5,5-trimethylhexanoic acid with pentaerythritol and/or di-(pentaerythritol). There are no particular restrictions on the mixing ratio for 2-ethylhexanoic acid and 3,5,5-trimethylhexanoic acid, but the molar ratio between 2-ethylhexanoic acid and 3,5,5-trimethylhexanoic acid is preferably 5-95:95-5, more preferably 10-90:90-10 and most preferably 30-70:70-30.

As more specific examples, the polyol ester of the invention is preferably an ester of a mixed fatty acid comprising one or more fatty acids selected from among hexanoic acid, heptanoic acid and octanoic acid as straight-chain fatty acids and one or more fatty acids selected from among 2-methylhexanoic acid, 2-ethylpentanoic acid, 2-methylheptanoic acid, 2-ethylhexanoic acid and 3,5,5-trimethylhexanoic acid as branched fatty acids, with one or more polyhydric alcohols selected from among neopentyl glycol, trimethylolethane, trimethylolpropane, trimethylolbutane, pentaerythritol and di-(pentaerythritol), more preferably an ester of a mixed fatty acid comprising one or more fatty acids selected from among hexanoic acid and heptanoic acid as straight-chain fatty acids and one or more fatty acids selected from among 2-methylhexanoic acid, 2-ethylpentanoic acid, 2-methylheptanoic acid, 2-ethylhexanoic acid and 3,5,5-trimethylhexanoic acid as branched fatty acids, with one or more polyhydric alcohols selected from among pentaerythritol and di-(pentaerythritol), and even more preferably an ester of a mixed fatty acid comprising heptanoic acid as a straight-chain fatty acid and 3,5,5-trimethylhexanoic acid as a branched fatty acid, with one or more polyhydric alcohols selected from among pentaerythritol and di-(pentaerythritol). The straight-chain fatty acid and branched fatty acid mixing ratio is preferably such that the proportion of branched fatty acids is 30-100 mol%, more preferably 35-95 mol% and most preferably 40-95 mol% with respect to the total fatty acids.

The polyol ester of the invention may be a partial ester with a portion of the hydroxyl groups of the polyhydric alcohol remaining as hydroxyl groups without esterification, a complete ester with all of the hydroxyl groups esterified, or a mixture of a partial ester and a complete ester, but the hydroxyl value is preferably no greater than 10 mgKOH/g, even more preferably no greater than 5 mgKOH/g and most preferably no greater than 3 mgKOH/g.

The working fluid composition for a refrigerating machine of the invention may contain, as the polyol ester of the invention, a single polyol ester with a single structure, or a mixture of two or more polyol esters with different structures.

The polyol ester of the invention may be an ester of one fatty acid and one polyhydric alcohol, an ester of two or more fatty acids and one polyhydric alcohol, an ester of one fatty acid and two or more polyhydric alcohols, or an ester of two or more fatty acids and two or more polyhydric alcohols. Of these, particularly excellent low-temperature characteristics and compatibility with refrigerants are exhibited by polyol esters employing mixed fatty acids, and especially polyol esters comprising two or more fatty acids in the ester molecule.

There are no particular restrictions on the content of the polyol ester of the invention in the refrigerating machine oil, but for more excellent performance including lubricity, refrigerant compatibility, thermal/chemical stability and electrical insulating properties, the content is preferably at least 50 wt%, more preferably at least 70 wt%, even more preferably at least 80 wt% and most preferably at least 90 wt%, based on the total weight of the refrigerating machine oil.

The working fluid composition for a refrigerating machine of the invention may also further contain a base oil other than the polyol ester of the invention, and various additives. In the explanation which follows, the contents of the base oils other than polyol esters of the invention and of the additives are given based on the total weight of the refrigerating machine oil, and the contents of these components in the refrigerating machine fluid composition are preferably selected to be within the preferred ranges specified below, based on the total amount of refrigerating machine oil.

As base oils other than the polyol ester of the invention there may be used hydrocarbon-based oils including mineral oils, olefin polymers, alkyldiphenylalkanes, alkylnaphthalenes, and alkylbenzenes, esteric base oils other than the polyol esters of the invention

(monoesters, polyol esters containing only straight-chain fatty acids as constituent fatty acids, alkyl aromatic esters and alicyclic carboxylic acid esters), and oxygen-containing synthetic oils such as polyglycols, polyvinyl ethers, ketones, polyphenyl ethers, silicones, polysiloxanes and perfluoroethers. Among the aforementioned oxygen-containing synthetic oils there are preferably used esters other than the polyol esters of the invention, and polyglycols and polyvinyl ethers.

If necessary, the composition may be used as a refrigerating machine oil in a form that further contains various additives. In the explanation which follows, the additive contents are given based on the total weight of the refrigerating machine oil, and the contents of these components in the refrigerating machine fluid composition are preferably selected to be within the preferred ranges specified below, based on the total amount of the refrigerating machine oil.

In order to further enhance the antiwear property and load carrying capacity of the working fluid composition for a refrigerating machine according to the invention, there may be added one or more phosphorus compounds selected from the group consisting of phosphoric acid esters, acidic phosphoric acid esters, thiophosphoric acid esters, acidic phosphoric acid ester amine salts, chlorinated phosphoric acid esters and phosphorous acid esters. These phosphorus compounds are esters of phosphoric acid or phosphorous acid with alkanols or polyether alcohols, or derivatives thereof.

As specific examples of phosphoric acid esters there may be mentioned tributyl phosphate, tripentyl phosphate, trihexyl phosphate, triheptyl phosphate, trioctyl phosphate, trinonyl phosphate, tridecyl phosphate, triundecyl phosphate, tridodecyl phosphate, tritridecyl phosphate, tritetradecyl phosphate, tripentadecyl phosphate, trihexadecyl phosphate, triheptadecyl phosphate, trioctadecyl phosphate, trioleyl phosphate, triphenyl phosphate, tricresyl phosphate, trixylenyl phosphate, cresyldiphenyl phosphate and xylenyldiphenyl phosphate.

As acidic phosphoric acid esters there may be mentioned monobutyl acid phosphate, monopentyl acid phosphate, monohexyl acid phosphate, monoheptyl acid phosphate, monooctyl acid phosphate, monononyl acid phosphate, monodecyl acid phosphate, monoundecyl acid phosphate, monododecyl acid phosphate, monotridecyl acid phosphate, monotetradecyl acid phosphate, monopentadecyl acid phosphate, monohexadecyl acid phosphate, monoheptadecyl acid phosphate, monooctadecyl acid phosphate, monooleyl acid phosphate, dibutyl acid phosphate, dipentyl acid phosphate, dihexyl acid phosphate, diheptyl acid phosphate, dioctyl acid phosphate, dinonyl acid phosphate, didecyl acid phosphate, diundecyl acid phosphate, didodecyl acid phosphate, ditridecyl acid phosphate, ditetradecyl acid phosphate, dipentadecyl acid phosphate, dihexadecyl acid phosphate, diheptadecyl acid phosphate, dioctadecyl acid phosphate and dioleyl acid phosphate.

As thiophosphoric acid esters there may be mentioned tributyl phosphorothionate, tripentyl phosphorothionate, trihexyl phosphorothionate, triheptyl phosphorothionate, trioctyl phosphorothionate, trinonyl phosphorothionate, tridecyl phosphorothionate, triundecyl phosphorothionate, tridodecyl phosphorothionate, tritridecyl phosphorothionate, tritetradecyl phosphorothionate, tripentadecyl phosphorothionate, trihexadecyl phosphorothionate, triheptadecyl phosphorothionate, trioctadecyl phosphorothionate, trioleyl phosphorothionate, triphenyl phosphorothionate, tricresyl phosphorothionate, trixylenyl phosphorothionate, cresyldiphenyl phosphorothionate and xylenyldiphenyl phosphorothionate.

As amine salts of acidic phosphoric acid esters there may be mentioned salts of amines such as methylamine, ethylamine, propylamine, butylamine, pentylamine, hexylamine, heptylamine, octylamine, dimethylamine, diethylamine, dipropylamine, dibutylamine, dipentylamine, dihexylamine, diheptylamine, dioctylamine, trimethylamine, triethylamine, tripropylamine, tributylamine, tripentylamine, trihexylamine, triheptylamine and trioctylamine, of the aforementioned acidic phosphoric acid esters.

As chlorinated phosphoric acid esters there may be mentioned tris(dichloropropyl) phosphate, tris(chloroethyl) phosphate, tris(chlorophenyl) phosphate and polyoxyalkylene bis[di(chloroalkyl)] phosphate. As phosphorous acid esters there may be mentioned dibutyl phosphite, dipentyl phosphite, dihexyl phosphite, diheptyl phosphite, dioctyl phosphite, dinonyl phosphite, didecyl phosphite, diundecyl phosphite, didodecyl phosphite, dioleyl phosphite, diphenyl phosphite, dicresyl phosphite, tributyl phosphite, tripentyl phosphite, trihexyl phosphite, triheptyl phosphite, trioctyl phosphite, trinonyl phosphite, tridecyl phosphite, triundecyl phosphite, tridodecyl phosphite, trioleyl phosphite, triphenyl phosphite and tricresyl phosphite. Mixtures of the above compounds may also be used.

When the working fluid composition for a refrigerating machine of the invention contains such phosphorus compounds, the phosphorus compound content is not particularly restricted but is preferably 0.01-5.0 wt% and more preferably 0.02-3.0 wt% based on the total weight of the refrigerating machine oil (the total weight of the base oil and all of the additives). A single type of phosphorus compound may be used alone or two or more may be used in combination.

The working fluid composition for a refrigerating machine of the invention may also contain added terpene compounds for further improved thermal and chemical stability. A "terpene compound" according to the invention is a compound obtained by polymerization of isoprene or a derivative thereof, and isoprene 2-8mers are preferably used. As terpene compounds there may be mentioned, specifically, monoterpenes such as geraniol, nerol, linalool, citrals (including geranial), citronellol, menthol, limonene, terpinerol, carvone, ionone, thujone, camphor and borneol, sesquiterpenes such as farnesene, farnesol, nerolidol, juvenile hormone, humulene, caryophyllene, elemen, cadinol, cadinene and tutin, diterpenes such as geranylgeraniol, phytol, abietic acid, pimaradiene, daphnetoxin, taxol, abietic acid and pimaric acid, sestaterpenes such as geranylfarnesene, triterpenes such as squalene, limonin, camelliagenin, hopane and lanosterol, and tetraterpenes such as carotenoids.

Preferred among these terpene compounds are monoterpenes, sesquiterpenes and diterpenes, with sesquiterpenes being more preferred and α-farnesene (3,7,11-trimethyldodeca-1,3,6,10-tetraene) and/or β-farnesene (7,11-dimethyl-3-methylidenedodeca-1,6,10-triene) being especially preferred. According to the invention, a single type of terpene compound may be used alone, or two or more may be used in combination.

There are no particular restrictions on the content of terpene compounds in the refrigerating machine oil, but it is preferably 0.001-10 wt%, more preferably 0.01-5 wt% and even more preferably 0.05-3 wt% based on the total weight of the refrigerating machine oil. A terpene compound content of less than 0.001 wt% will tend to result in an insufficient improving effect on the thermal and chemical stability, while a content of greater than 10 wt% will tend to result in insufficient lubricity. The content of terpene compounds in the working fluid composition for a refrigerating machine according to the invention is preferably selected so as to fall within the aforementioned preferred range based on the total weight of the refrigerating machine oil.

In order to further improve the thermal and chemical stability of the working fluid composition for a refrigerating machine according to the invention, it may contain one or more epoxy compounds selected from among phenylglycidyl ether-type epoxy compounds, alkylglycidyl ether-type epoxy compounds, glycidyl ester-type epoxy compounds, allyloxirane compounds, alkyloxirane compounds, alicyclic epoxy compounds, epoxidized fatty acid monoesters and epoxidized vegetable oils.

Specific examples of phenylglycidyl ether-type epoxy compounds include phenyl glycidyl ethers and alkylphenyl glycidyl ethers. An alkylphenylglycidyl ether is one having 1-3 C₁-C₁₃ alkyl groups, among which preferred examples with 1 C₄-C₁₀ alkyl group include n-butyl phenyl glycidyl ether, i-butylphenyl glycidyl ether, sec-butylphenyl glycidyl ether, tert-butylphenyl glycidyl ether, pentylphenyl glycidyl ether, hexylphenyl glycidyl ether, heptylphenyl glycidyl ether, octylphenyl glycidyl ether, nonylphenyl glycidyl ether and decylphenyl glycidyl ether.

Specific examples of alkyl glycidyl ether-type epoxy compounds include decyl glycidyl ether, undecyl glycidyl ether, dodecyl glycidyl ether, tridecyl glycidyl ether, tetradecyl glycidyl ether, 2-ethylhexyl glycidyl ether, neopentylglycol diglycidyl ether, trimethylolpropanetriglycidyl ether, pentaerythritol tetraglycidyl ether, 1,6-hexanediol diglycidyl ether, sorbitol polyglycidyl ether, polyalkyleneglycol monoglycidyl ether and polyalkyleneglycol diglycidyl ether.

As specific examples of glycidyl ester-type epoxy compounds there may be mentioned phenylglycidyl esters, alkylglycidyl esters and alkenylglycidyl esters, among which preferred examples include glycidyl-2,2-dimethyl octanoate, glycidyl benzoate, glycidyl acrylate and glycidyl methacrylate.

Specific examples of allyloxirane compounds include 1,2-epoxystyrene and alkyl-1,2-epoxystyrenes.

Specific examples of alkyloxirane compounds include 1,2-epoxybutane, 1,2-epoxypentane, 1,2-epoxyhexane, 1,2-epoxyheptane, 1,2-epoxyoctane, 1,2-epoxynonane, 1,2-epoxydecane, 1,2-epoxyundecane, 1,2-epoxydodecane, 1,2-epoxytridecane, 1,2-epoxytetradecane, 1,2-epoxypentadecane, 1,2-epoxyhexadecane, 1,2-epoxyheptadecane, 1,1,2-epoxyoctadecane, 2-epoxynonadecane and 1,2-epoxyeicosane.

Specific examples of alicyclic epoxy compounds include 1,2-epoxycyclohexane, 1,2-epoxycyclopentane, 3,4-epoxycyclohexylmethyl-3,4-epoxycyclohexane carboxylate, bis(3,4-epoxycyclohexylmethyl)adipate, exo-2,3-epoxynorbornane, bis(3,4-epoxy-6-methylcyclohexylmethyl)adipate, 2-(7-oxabicyclo[4.1.0]hept-3-yl)-spiro(1,3-dioxane-5,3'-[7]oxabicyclo[4.1.0]heptane, 4-(1'-methylepoxyethyl)-1,2-epoxy-2-methylcyclohexane and 4-epoxyethyl-1,2-epoxycyclohexane.

Specific examples of epoxidized fatty acid monoesters include esters of epoxidized C₁₂-C₂₀ fatty acids and C₁-C₈ alcohols or phenols or alkylphenols. Most preferably used are butyl, hexyl, benzyl, cyclohexyl, methoxyethyl, octyl, phenyl and butylphenyl esters of epoxystearic acid.

Specific examples of epoxidized vegetable oils include epoxy compounds of vegetable oils such as soybean oil, linseed oil and cottonseed oil.

Preferred among these epoxy compounds are phenylglycidyl ether-type epoxy compounds, glycidyl ester-type epoxy compounds, alicyclic epoxy compounds and epoxidized fatty acid monoesters. More preferred among these are phenylglycidyl ether-type epoxy compounds and glycidyl ester-type epoxy compounds, with phenyl glycidyl ether, butylphenyl glycidyl ether, alkylglycidyl ester or mixtures thereof being especially preferred.

When the working fluid composition for a refrigerating machine according to the invention contains such epoxy compounds, the epoxy compound content is not particularly restricted but is preferably 0.1-5.0 wt% and more preferably 0.2-2.0 wt% based on the total weight of the refrigerating machine oil. A single type of epoxy compound may be used alone, or two or more may be used in combination.

In order to further increase the performance of the working fluid composition for a refrigerating machine according to the invention, conventionally known refrigerating machine oil additives may be included as necessary. As examples of such additives there may be mentioned phenol-based antioxidants such as di-tert-butyl-p-cresol and bisphenol A, amine-based antioxidants such as phenyl-α-naphthylamine and N,N-di(2-naphthyl)-p-phenylenediamine, anti-wear agents such as zinc dithiophosphate, extreme-pressure agents such as chlorinated paraffins and sulfur compounds, oiliness agents such as fatty acids, silicone-based and other types of antifoaming agents, metal inactivating agents such as benzotriazoles, viscosity index improvers, pour point depressants, and detergent dispersants. A single type of additive may be used alone, or two or more may be used in combination. There are no particular restrictions on the content of such additives, but it is preferably no greater than 10 wt% and more preferably no greater than 5 wt% based on the total weight of the refrigerating machine oil.

The kinematic viscosity of the refrigerating machine oil is not particularly restricted, but the kinematic viscosity at 40°C is preferably 3-1000 mm²/s, more preferably 4-500 mm²/s and most preferably 5-400 mm²/s. The kinematic viscosity at 100°C is preferably 1-100 mm²/s and more preferably 2-50 mm²/s.

The volume resistivity of the refrigerating machine oil is also not particularly restricted, but is preferably 1.0 x 10¹² Ω·cm or greater, more preferably 1.0 x 10¹³ Ω·cm or greater and most preferably 1.0 x 10¹⁴ Ω·cm or greater. High electrical insulating properties will usually be required for use in hermetic type refrigerating machine devices. The volume resistivity is the value measured according to JIS C 2101, "Testing methods of electrical insulating oils", at 25°C.

The moisture content of the refrigerating machine oil is not particularly restricted but is preferably no greater than 200 ppm, more preferably no greater than 100 ppm and most preferably no greater than 50 ppm based on the total weight of the refrigerating machine oil. A lower moisture content is desired from the viewpoint of effect on the thermal/chemical stability and electrical insulating properties of the refrigerating machine oil, especially for use in sealed refrigerating machines.

The acid value of the refrigerating machine oil is also not particularly restricted, but in order to prevent corrosion of metals used in the refrigerating machine device or pipings, and in order to prevent decomposition of the ester oil in the refrigerating machine oil, it is preferably no greater than 0.1 mgKOH/g and more preferably no greater than 0.05 mgKOH/g. The acid value is the value measured based on JIS K2501, "Petroleum products and lubricants - Determination of neutralization number".

The ash content of the refrigerating machine oil is not particularly restricted, but in order to increase the thermal and chemical stability of the refrigerating machine oil for a fluoropropene refrigerant and inhibit generation of sludge, it is preferably no greater than 100 ppm and more preferably no greater than 50 ppm. The ash content is the value measured based on JIS K2272, "Crude oil and petroleum products - Determination of ash and sulfates ash".

The refrigerating machine oil is used together with a fluoropropene refrigerant and/or a trifluoroiodomethane refrigerant, and the working fluid composition for a refrigerating machine of the invention comprises a fluoropropene refrigerant and/or a trifluoroiodomethane refrigerant. The refrigerant used according to the invention may consist of either a fluoropropene refrigerant or trifluoroiodomethane refrigerant alone, or it may be a refrigerant mixture comprising a fluoropropene refrigerant and trifluoroiodomethane refrigerant.

Preferred fluoropropene refrigerants are fluoropropenes with 3-5 fluorine atoms, among which one or mixtures of two or more from among 1,2,3,3,3-pentafluoropropene (HFC-1225ye), 1,3,3,3-tetrafluoropropene (HFC-1234ze), 2,3,3,3-tetrafluoropropene (HFC-1234yf), 1,2,3,3-tetrafluoropropene (HFC1234ye) and 3,3,3-trifluoropropene (HFC-1243zf) are preferred. From the viewpoint of refrigerant properties, it is preferred to use one or more selected from among HFC-1225ye, HFC-1234ze and HFC-1234yf.

The refrigerant used according to the invention may also be a refrigerant mixture comprising a fluoropropene refrigerant and a trifluoroiodomethane refrigerant with another refrigerant. As other refrigerants there may be mentioned HFC refrigerants, fluorinated ether-based refrigerants such as perfluoroethers, and natural refrigerants including dimethyl ether, ammonia, and hydrocarbons.

As HFC refrigerants there may be mentioned C₁-C₃ and preferably C₁-C₂ hydrofluorocarbons. As specific examples there may be mentioned difluoromethane (HFC-32), trifluoromethane (HFC-23), pentafluoroethane (HFC-125), 1,1,2,2-tetrafluoroethane (HFC-134), 1,1,1,2-tetrafluoroethane (HFC-134a), 1,1,1-trifluoroethane (HFC-143a), 1,1-difluoroethane (HFC-152a), fluoroethane (HFC-161), 1,1,1,2,3,3,3-heptafluoropropane (HFC-227ea), 1,1,1,2,3,3-hexafluoropropane (HFC-236ea), 1,1,1,3,3,3-hexafluoropropane (HFC-236fa), 1,1,1,3,3-pentafluoropropane (HFC-245fa) and 1,1,1,3,3-pentafluorobutane (HFC-365 mfc), as well as mixtures of two or more thereof. These refrigerants may be appropriately selected depending on the purpose of use and the required performance, but as preferred examples there may be mentioned HFC-32 alone; HFC-23 alone; HFC-134a alone; HFC-125 alone; HFC-134a/HFC-32 = 60-80 wt%/40-20 wt% mixture; HFC-32/HFC-125 = 40-70 wt%/60-30 wt% mixture: HFC-125/HFC-143a = 40-60 wt%/60-40 wt% mixture; HFC-134a/HFC-32/HFC-125 = 60 wt%/30 wt%/10 wt% mixture; HFC-134a/HFC-32/HFC-125 = 40-70 wt%/15-35 wt%/5-40 wt% mixture; and HFC-125/HFC-134a/HFC-143a = 35-55 wt%/1-15 wt%/40-60 wt% mixture. More specifically, there may be mentioned HFC-134a/HFC-32 = 70/30 wt% mixture; HFC-32/HFC-125 = 60/40 wt% mixture; HFC-32/HFC-125 = 50/50 wt% mixture (R410A); HFC-32/HFC-125 = 45/55 wt% mixture (R410B); HFC-125/HFC-143a = 50/50 wt% mixture (R507C); HFC-32/HFC-125/HFC-134a = 30/10/60 wt% mixture; HFC-32/HFC-125/HFC-134a = 23/25/52 wt% mixture (R407C); HFC-32/HFC-125/HFC-134a = 25/15/60 wt% mixture (R407E); and HFC-125/HFC-134a/HFC-143a = 44/4/52 wt% mixture (R404A).

As saturated hydrofluorocarbons among HFC refrigerants, there are preferred one or mixtures of two or more selected from among difluoromethane (HFC-32), pentafluoroethane (HFC-125), 1,1,2,2-tetrafluoroethane (HFC-134), 1,1,1,2-tetrafluoroethane (HFC-134a), 1,1-difluoroethane (HFC-152a), fluoroethane (HFC-161), 1,1,1,2,3,3,3-heptafluoropropane (HFC-227ea), 1,1,1,2,3,3-hexafluoropropane (HFC-236ea), 1,1,1,3,3,3-hexafluoropropane (HFC-236fa), 1,1,1,3,3-pentafluoropropane (HFC-245fa) and 1,1,1,3,3-pentafluorobutane (HFC-365 mfc), and from the viewpoint of refrigerant properties there are especially preferred HFC-32, HFC-125, HFC-134a, HFC-152a and mixtures of HFC-32 and HFC-134a.

As hydrocarbon refrigerants there are preferredhydrocarbons having from 3 to 5 carbon atoms in the molecule, and as specific examples there may be mentioned methane, ethylene, ethane, propylene, propane, cyclopropane, n-butane, isobutane, cyclobutane, methylcyclopropane, 2-methylbutane, n-pentane, and mixtures of two or more of the foregoing. Preferred among these are refrigerants that are gases at 25°C, 1 atmosphere, such as propane, *n*-butane, isobutane, 2-methylbutane, and mixtures thereof.

As specific examples of fluorinated ether-based refrigerants there may be mentioned HFE-134p, HFE-245mc, HFE-236mf, HFE-236me, HFE-338mcf, HFE-365mcf, HFE-245mf, HFE-347mmy, HFE-347mcc, HFE-125, HFE-143m, HFE-134m, and HFE-227me, and these refrigerants may be appropriately selected depending on the purpose of use and the required performance.

When the refrigerant used according to the invention is a refrigerant mixture, the refrigerant mixture preferably contains at least one component selected from among fluoropropene refrigerants (hereinafter referred to as "refrigerant (A)") and at least one component selected from among saturated hydrofluorocarbon, hydrocarbon having from 3 to 5 carbon atoms in the molecule, dimethyl ether, carbon dioxide, bis(trifluoromethyl)sulfide and trifluoroiodomethane refrigerants (hereinafter referred to as "refrigerant (B)").

When the refrigerant used according to the invention is a refrigerant mixture comprising refrigerant (A) and refrigerant (B), the refrigerant mixture is preferably an azeotropic mixture, but it is not necessary to be an azeotropic mixture so long as it has the properties required as a refrigerant, and the mixing ratio of both components is preferably 1:99-99:1 and more preferably 5:95-95:5.

Also, when the refrigerant used according to the invention is a refrigerant mixture comprising refrigerant (A) and refrigerant (B), the refrigerant mixture may further contain an HFC refrigerant other than the fluoropropene refrigerant or the saturated hydrofluorocarbon, a fluorinated ether-based refrigerant such as a perfluoroether, or a natural refrigerant such as a hydrocarbon other than a hydrocarbon having from 3 to 5 carbon atoms in the molecule, or ammonia.

The composition used as a refrigerating machine oil according to the invention will normally be used in a refrigerating air conditioner in the form of the aforementioned refrigerating machine fluid composition, in admixture with a fluoropropene refrigerant and/or a trifluoroiodomethane refrigerant, or a refrigerant mixture. There are no particular restrictions on the mixing proportion of the refrigerating machine oil and the refrigerant in the composition, or on the mixing proportion of the refrigerating machine oil and the refrigerant in the working fluid composition for a refrigerating machine according to the invention, but the refrigerating machine oil content is preferably 1-500 parts by weight and more preferably 2-400 parts by weight with respect to 100 parts by weight of the refrigerant.

The working fluid composition for a refrigerating machine of the invention is preferably used in an air conditioner or refrigerating machine with a reciprocating or rotating hermetic type compressor, or in an open or hermetic type automobile air conditioner. The working fluid composition for a refrigerating machine according to the invention may also be suitably used in cooling devices of dehumidifiers, water heaters, freezers, cold storage/refrigerated warehouses, automatic vending machines, showcases, and chemical plants. The working fluid composition for a refrigerating machine according to the invention may also be suitably used in devices with centrifugal compressors.

### Examples

The present invention will now be explained in greater detail based on examples and comparative examples.

### [Examples 1-11 and Comparative Examples 1-4]

For Examples 1-11 and Comparative Examples 1-4, refrigerating machine oils were prepared using base oils 1-15 listed below. The properties of the obtained refrigerating machine oils are shown in Tables 1-3.

### (Base oils)

Base oil 1: Ester of 2-ethylhexanoic acid and neopentyl glycol
Base oil 2: Ester of 2-ethylhexanoic acid and trimethylolpropane
Base oil 3: Ester of 2-ethylhexanoic acid and pentaerythritol
Base oil 4: Ester of fatty acid mixture of 2-ethylhexanoic acid and 3,5,5-trimethylhexanoic acid (mixing ratio (molar ratio): 50/50) and pentaerythritol
Base oil 5: Ester of fatty acid mixture of 2-ethylhexanoic acid and 3,5,5-trimethylhexanoic acid (mixing ratio (molar ratio): 50/50) and dipentaerythritol
Base oil 6: Mixture of base oil 1 and base oil 3 (mixing ratio (weight ratio): base oil 1/base oil 3 = 35/65)
Base oil 7: Mixture of base oil 1 and base oil 4 (mixing ratio (weight ratio): base oil 1/base oil 4 = 25/75)
Base oil 8: Mixture of base oil 4 and base oil 5 (mixing ratio (weight ratio): base oil 4/base oil 5 = 75/25)
Base oil 9: Ester of fatty acid mixture of n-heptanoic acid and 3,5,5-trimethylhexanoic acid (mixing ratio (molar ratio): 15/85) and pentaerythritol
Base oil 10: Ester of fatty acid mixture of n-heptanoic acid and 3,5,5-trimethylhexanoic acid (mixing ratio (molar ratio): 55/45) with pentaerythritol/dipentaerythritol = 50/50 molar ratio.
Base oil 11: Ester of fatty acid mixture of n-pentanoic acid, n-heptanoic acid and 3,5,5-trimethylhexanoic acid (mixing ratio (molar ratio): 10/40/50) and pentaerythritol
Base oil 12: Ester of n-heptanoic acid and pentaerythritol
Base oil 13: Ester of fatty acid mixture of n-pentanoic acid, n-heptanoic acid and 3,5,5-trimethylhexanoic acid (mixing ratio (molar ratio): 45/10/45) and pentaerythritol
Base oil 14: Naphthenic mineral oil
Base oil 15: Polypropyleneglycol monomethyl ether

Each of the refrigerating machine oils obtained in Examples 1-11 and Comparative Examples 1-4 was subjected to an evaluation test in the following manner.

### (Refrigerant compatibility evaluation 1)

Following the procedure outlined in "Refrigerant Compatibility Test Method" under "Refrigerating Machine Oils" of JIS-K-2211, 2 g of refrigerating machine oil was combined with 18 g of a refrigerant mixture of 2,3,3,3-tetrafluoropropene and trifluoroiodomethane (mixing ratio (weight ratio): 2,3,3,3-tetrafluoropropene/trifluoroiodomethane = 70/30), and it was observed whether the refrigerant and the refrigerating machine oil mutually dissolved at 0°C. The results are shown in Tables 1-3. In Tables 1-3, "compatible" means that the refrigerant and the refrigerating machine oil mutually dissolved, and "separated" means that the refrigerant and the refrigerating machine oil separated into two layers.

### (Refrigerant compatibility evaluation 2)

Following the procedure outlined in "Refrigerant Compatibility Test Method" under "Refrigerating Machine Oils" of JIS-K-2211, 2 g of refrigerating machine oil was combined with 18 g of 2,3,3,3-tetrafluoropropene, and it was observed whether the refrigerant and the refrigerating machine oil mutually dissolved at 0°C. The results are shown in Tables 1-3. In Tables 1-3, "compatible" means that the refrigerant and the refrigerating machine oil mutually dissolved, and "separated" means that the refrigerant and the refrigerating machine oil separated into two layers.

### (Thermal/chemical stability evaluation 1)

Following the procedure outlined in JIS-K-2211, 1 g of a refrigerating machine oil prepared to a moisture content of no greater than 10 ppm (initial ASTM color : L0.5) and 1 g of a refrigerant mixture of 2,3,3,3-tetrafluoropropene and trifluoroiodomethane (mixing ratio (weight ratio): 2,3,3,3-tetrafluoropropene/trifluoroiodomethane = 70/30) were filled into a glass tube together with a catalyst (iron, copper and aluminum wires), and then heated to 150°C and stored for one week for testing. After the test, the ASTM color of the refrigerating machine oil and the change in catalyst color were evaluated. The ASTM color was evaluated according to ASTM D156. The change in catalyst color was determined by visual observation of the outer appearance, and evaluation was made as "no change", "no gloss" or "blackening". The results are shown in Tables 1-3.

### (Thermal/chemical stability evaluation 2)

Following the procedure outlined in JIS-K-2211, 1 g of a refrigerating machine oil prepared to a moisture content of no greater than 10 ppm (initial ASTM color : L0.5) and 1 g of 2,3,3,3-tetrafluoropropene were filled into a glass tube together with a catalyst (iron, copper and aluminum wires), and then heated to 150°C and stored for one week for testing. After the test, the ASTM color of the refrigerating machine oil composition and the change in catalyst color were evaluated. The ASTM color was evaluated according to ASTM D156. The change in catalyst color was determined by visual observation of the outer appearance, and evaluation was made as "no change", "no gloss" or "blackening". The results are shown in Tables 1-3.

**[Table 1]**

| | | | Example 1 | Example 2 | Example 3 | Example 4 | Example 5 | Example 6 |
|---|---|---|---|---|---|---|---|---|
| Base oil No. | | | 1 | 2 | 3 | 4 | 5 | 6 |
| Kinematic viscosity at 40°C (mm²/s) | | | 7.3 | 24.1 | 45.3 | 68.3 | 244 | 22.3 |
| Kinematic viscosity at 100°C (mm²/s) | | | 2 | 4.2 | 6.3 | 8.3 | 19.2 | 4.1 |
| Proportion of C₅-C₉ fatty acids among constituent fatty acids of ester (mol%) | | | 100 | 100 | 100 | 100 | 100 | 100 |
| Proportion of C₅-C₉ branched fatty acids among constituent fatty acids of ester (mol%) | | | 100 | 100 | 100 | 100 | 100 | 100 |
| Proportion of C₅ or lower straight -chain fatty acids among cnstituent fatty acids of ester (mol%) | | | 0 | 0 | 0 | 0 | 0 | 0 |
| Refrigerant compatibility 1 | | | Compatible | Compatible | Compatible | Compatible | Compatible | Compatible |
| Thermal /chemical stability 1 | ASTM color (ASTM D156) | | L0.5 | L0.5 | L0.5 | L0.5 | L0.5 | L0.5 |
| | Catalyst appearance | Cu | No change | No change | No change | No change | No change | No change |
| | | Fe | No change | No change | No change | No change | No change | No change |
| | | Al | No change | No change | No change | No change | No change | No change |
| Refrigerant compatibility 2 | | | Compatible | Compatible | Compatible | Compatible | Compatible | Compatible |
| Thermal /chemical stability 2 | ASTM color (ASTM D156) | | L0.5 | L0.5 | L0.5 | L0.5 | L0.5 | L0.5 |
| | Catalyst appearance | Cu | No change | No change | No change | No change | No change | No change |
| | | Fe | No change | No change | No change | No change | No change | No change |
| | | Al | No change | No change | No change | No change | No change | No change |

**[Table 2]**

| | | | Example 7 | Example 8 | Example 9 | Example 10 | Example 11 |
|---|---|---|---|---|---|---|---|
| Base oil No. | | | 7 | 8 | 9 | 10 | 11 |
| Kinematic viscosity at 40°C (mm²/s) | | | 33.5 | 83.8 | 74.2 | 67.5 | 44.3 |
| Kinematic viscosity at 100°C (mm²/s) | | | 5.4 | 9.6 | 9.2 | 9.5 | 6.83 |
| Proportion of C₅-C₉ fatty acids among constituent fatty acids of ester (mol%) | | | 100 | 100 | 100 | 100 | 100 |
| Proportion of C₅-C₉ branched fatty acids among constituent fatty acids of ester (mol%) | | | 100 | 100 | 85 | 45 | 60 |
| Proportion of C₅ or lower straight-chain fatty acids among constituent fatty acids of ester (mol%) | | | 0 | 0 | 0 | 0 | 10 |
| IRefrigerant compatibility 1 | | | Compatible | Compatible | Compatible | Compatible | Compatible |
| Thermal /chemical stability 1 | ASTM color (ASTM D156) | | L0.5 | L0.5 | L1.0 | L1.5 | L1.5 |
| | Catalyst appearance | Cu | No change | No change | No change | No gloss | No gloss |
| | | Fe | No change | No change | No change | No change | No change |
| | | Al | No change | No change | No change | No change | No change |
| Refrigerant compatibility 2 | | | Compatible | Compatible | Compatible | Compatible | Compatible |
| Thermal /chemical stability 2 | ASTM color (ASTM D156) | | L0.5 | L0.5 | L0.5 | L0.5 | L0.5 |
| | Catalyst appearance | Cu | No change | No change | No change | No gloss | No gloss |
| | | Fe | No change | No change | No change | No change | No change |
| | | Al | No change | No change | No change | No change | No change |

**[Table 3]**

| | | | Comparative Example 1 | Comparative Example 2 | Comparative Example 3 | Comparative Example 4 |
|---|---|---|---|---|---|---|
| Base oil No. | | | 12 | 13 | 14 | 15 |
| Kinematic viscosity at 40°C (mm²/s) | | | 21.8 | 33.2 | 56.1 | 50.2 |
| Kinematic viscosity at 100°C (mm²/s) | | | 4.7 | 5.8 | 5.9 | 9.9 |
| Proportion of C₅-C₉ fatty acids among constituent fatty acids of ester (mol%) | | | 100 | 100 | - | - |
| Proportion of C₅-C₉ branched fatty acids among constituent fatty acids of ester (mol%) | | | 0 | 45 | - | - |
| Proportion of C₅ or lower straight-chain fatty acids among constituent fatty acids of ester (mol%) | | | 0 | 45 | - | - |
| Refrigerant compatibility 1 | | | Compatible | Compatible | Separated | Compatible |
| Thermal/ chemical stability 1 | ASTM color (ASTM D156) | | L4.0 | L4.0 | D8.0 | D8.0 |
| | Catalyst appearance | Cu | No gloss | No gloss | Blackening | Blackening |
| | | Fe | Blackening | Blackening | Blackening | Blackening |
| | | Al | No change | No change | Blackening | Blackening |
| Refrigerant compatibility 2 | | | Separated | Compatible | Separated | Compatible |
| Thermal/ chemical stability 2 | ASTM color (ASTM D 156) | | L0.5 | L0.5 | L0.5 | L0.5 |
| | Catalyst appearance | Cu | No gloss | No gloss | No change | No change |
| | | Fe | No gloss | No gloss | No change | No change |
| | | Al | No change | No change | No change | No change |

As clearly seen by the results in Tables 1-3, the refrigerating machine oils of Examples 1-11, when used with a fluoropropene refrigerant and a trifluoroiodomethane refrigerant, exhibited excellent refrigerant compatibility and thermal/chemical stability.

### Industrial Applicability

The present invention is useful as a working fluid composition to be used in a refrigerating machine employing a fluoropropene refrigerant and/or a trifluoroiodomethane refrigerant.

## Claims

1. A working fluid composition for a refrigerating machine **characterized by** comprising
an ester of a polyhydric alcohol and a fatty acid with a C₅-C₉ fatty acid content of 50-100 mol%, a C₅-C₉ branched fatty acid content of at least 30 mol% and a C₅ or lower straight-chain fatty acid content of no greater than 40 mol%, and
a fluoropropene refrigerant and/or a trifluoroiodomethane refrigerant.

2. The working fluid composition for a refrigerating machine according to claim 1, **characterized in that** the polyhydric alcohol is pentaerythritol and/or dipentaerythritol.

3. The working fluid composition for a refrigerating machine according to claim 1 or 2, **characterized by** containing at least one component selected from among 1,3,3,3-tetrafluoropropene and 2,3,3,3-tetrafluoropropene as the fluoropropene refrigerant.

4. The working fluid composition for a refrigerating machine according to any one of claims 1 to 3, **characterized by** containing
at least one fluoropropene refrigerant, and
at least one component selected from among saturated hydrofluorocarbon, hydrocarbon having from 3 to 5 carbon atoms in the molecule, dimethyl ether, carbon dioxide, bis(trifluoromethyl)sulfide and trifluoroiodomethane refrigerants.

5. The working fluid composition for a refrigerating machine according to claim 4, **characterized in that**
the fluoropropene refrigerant is at least one selected from among 1,2,3,3,3-pentafluoropropene, 1,3,3,3-tetrafluoropropene, 2,3,3,3-tetrafluoropropene, 1,2,3,3-tetrafluoropropene and 3,3,3-trifluoropropene,
the saturated hydrofluorocarbon is at least one selected from among difluoromethane, pentafluoroethane, 1,1,2,2-tetrafluoroethane, 1,1,1,2-tetrafluoroethane, 1,1-difluoroethane, fluoroethane, 1,1,1,2,3,3,3-heptafluoropropane, 1,1,1,2,3,3-hexafluoropropane, 1,1,1,3,3,3-hexafluoropropane, 1,1,1,3,3-pentafluoropropane and 1,1,1,3,3-pentafluorobutane, and
the hydrocarbon having from 3 to 5 carbon atoms in the molecule refrigerant is at least one selected from among propane, *n*-butane, isobutane, 2-methylbutane and *n*-pentane.

6. Use of a composition as a refrigerating machine oil in combination with a fluoropropene refrigerant and/or trifluoroiodomethane refrigerant, the composition comprising an ester of a polyhydric alcohol and a fatty acid with a C₅-C₉ fatty acid content of 50-100 mol%, a C₅-C₉ branched fatty acid content of at least 30 mol% and a C₅ or lower straight-chain fatty acid content of no greater than 40 mol%.

7. The use according to claim 6, **characterized in that** the polyhydric alcohol is pentaerythritol and/or dipentaerythritol.

## Patentansprüche

1. Arbeitsmediumzusammensetzung für eine Kältemaschine, **dadurch gekennzeichnet, dass** sie umfasst:
einen Ester von einem mehrwertigen Alkohol und einer Fettsäure mit einem Gehalt an C₅-C₉-Fettsäure von 50-100 mol%, einem Gehalt an verzweigter C₅-C₉-Fettsäure von wenigstens 30 mol% und einem Gehalt an geradkettiger C₅- oder niedrigerer Fettsäure von nicht mehr als 40 mol%, und
ein Fluorpropen-Kältemittel und/oder ein Trifluoriodmethan-Kältemittel.

2. Arbeitsmediumzusammensetzung für eine Kältemaschine gemäß Anspruch 1, **dadurch gekennzeichnet, dass** der mehrwertige Alkohol Pentaerythritol und/oder Dipentaerythritol ist.

3. Arbeitsmediumzusammensetzung für eine Kältemaschine gemäß Anspruch 1 oder 2, **dadurch gekennzeichnet, dass** sie wenigstens eine Komponente, ausgewählt aus 1,3,3,3-Tetrafluorpropen und 2,3,3,3-Tetrafluorpropen, als das Fluorpropen-Kältemittel enthält.

4. Arbeitsmediumzusammensetzung für eine Kältemaschine gemäß einem der Ansprüche 1 bis 3, **dadurch gekennzeichnet, dass** sie enthält:
wenigstens ein Fluorpropen-Kältemittel, und
wenigstens eine Komponente ausgewählt aus gesättigtem Fluorkohlenwasserstoff, Kohlenwasserstoff mit 3 bis 5 Kohlenstoffatomen in dem Molekül, Dimethylether, Kohlendioxid, Bis(trifluormethyl)sulfid und Trifluoriodmethan-Kältemitteln.

5. Arbeitsmediumzusammensetzung für eine Kältemaschine gemäß Anspruch 4, **dadurch gekennzeichnet, dass**
das Fluorpropen-Kältemittel wenigstens eines, ausgewählt aus 1,2,3,3,3-Pentafluorpropen, 1,3,3,3-Tetrafluorpropen, 2,3,3,3-Tetrafluorpropen, 1,2,3,3-Tetrafluorpropen und 3,3,3-Trifluorpropen, ist,
der gesättigte Fluorkohlenwasserstoff wenigstens einer, ausgewählt aus Difluormethan, Pentafluorethan, 1,1,2,2-Tetrafluorethan, 1,1,1,2-Tetrafluorethan, 1,1-Difluorethan, Fluorethan, 1,1,1,2,3,3,3-Heptafluorpropan, 1,1,1,2,3,3-Hexafluorpropan, 1,1,1,3,3,3-Hexafluorpropan, 1,1,1,3,3-Pentafluorpropan und 1,1,1,3,3-Pentafluorbutan, ist, und
der Kohlenwasserstoff mit 3 bis 5 Kohlenstoffatomen in dem Molekül als Kältemittel wenigstens einer, ausgewählt aus Propan, *n*-Butan, Isobutan, 2-Methylbutan und *n*-Pentan, ist.

6. Verwendung einer Zusammensetzung als ein Kältemaschinenöl in Kombination mit einem Fluorpropen-Kältemittel und/oder Trifluoriodmethan-Kältemittel, wobei die Zusammensetzung einen Ester von einem mehrwertigen Alkohol und einer Fettsäure mit einem Gehalt an C₅-C₉-Fettsäure von 50-100 mol%, einem Gehalt an verzweigter C₅-C₉-Fettsäure von wenigstens 30 mol% und einem Gehalt an geradkettiger C₅- oder niedrigerer Fettsäure von nicht mehr als 40 mol% umfasst.

7. Verwendung gemäß Anspruch 6, **dadurch gekennzeichnet, dass** der mehrwertige Alkohol Pentaerythritol und/oder Dipentaerythritol ist.

## Revendications

1. Composition de fluide caloporteur pour un appareil frigorifique **caractérisée en ce qu'**elle comprend
un ester d'un poly(alcool hydrique) et d'un acide gras avec une teneur en acide gras en C₅ à C₉ de 50 à 100 % en mole, une teneur en acide gras ramifié en C₅ à C₉ d'au moins 30 % en mole et une teneur en acide gras à chaîne linéaire en C₅ ou inférieur non supérieure à 40 % en mole, et
un agent réfrigérant fluoropropène et/ou un agent réfrigérant trifluoroiodométhane.

2. Composition de fluide caloporteur pour un appareil frigorifique selon la revendication 1, **caractérisée en ce que** le poly(alcool hydrique) est le pentaérythritol et/ou le dipentaérythritol.

3. Composition de fluide caloporteur pour un appareil frigorifique selon la revendication 1 ou 2, **caractérisée en ce qu'**elle contient au moins un composant sélectionné parmi le 1,3,3,3-tétrafluoropropène et le 2,3,3,3-tétrafluoropropène comme agent réfrigérant fluoropropène.

4. Composition de fluide caloporteur pour un appareil frigorifique selon l'une quelconque des revendications 1 à 3, **caractérisée en ce qu'**elle contient
au moins un agent réfrigérant fluoropropène, et
au moins un composant sélectionné parmi les agents réfrigérants hydrocarbures fluorés saturés, hydrocarbure ayant de 3 à 5 atomes de carbone dans la molécule, éther de diméthyle, dioxyde de carbone, bis(trifluorométhyl)sulfure et trifluoroiodométhane.

5. Composition de fluide caloporteur pour un appareil frigorifique selon la revendication 4, **caractérisée en ce que**
l'agent réfrigérant fluoropropène est au moins l'un sélectionné parmi le 1,2,3,3,3-pentafluoropropène, le 1,3,3,3-tétrafluoropropène, le 2,3,3,3-tétrafluoropropène, le 1,2,3,3-tétrafluoropropène et le 3,3,3-trifluoropropène,
l'hydrocarbure fluoré saturé est au moins l'un sélectionné parmi le difluorométhane, le pentafluoroéthane, le 1,1,2,2-tétrafluoroéthane, le 1,1,1,2-tétrafluoroéthane, le 1,1-difluoroéthane, le fluoroéthane, le 1,1,1,2,3,3,3-heptafluoropropane, le 1,1,1,2,3,3-hexafluoropropane, le 1,1,1,3,3,3-hexafluoropropane, le 1,1,1,3,3-pentafluoropropane et le 1,1,1,3,3-pentafluorobutane, et
l'hydrocarbure ayant de 3 à 5 atomes de carbone dans la molécule réfrigérante est au moins l'un sélectionné parmi le propane, le *n*-butane, l'isobutane, le 2-méthylbutane et *n*-pentane.

6. Utilisation d'une composition comme huile pour un appareil frigorifique en combinaison avec un agent réfrigérant fluoropropène et/ou un agent réfrigérant trifluoroiodométhane, la composition comprenant un ester d'un poly (alcool hydrique) et un acide gras avec une teneur en acide gras en C₅ à C₉ de 50 à 100 % en mole, une teneur en acide gras ramifié en C₅ à C₉ d'au moins 30 % en mole et une teneur en acide gras à chaîne linéaire en C₅ ou inférieur non supérieure à 40 % en mole.

7. Utilisation selon la revendication 6, **caractérisée en ce que** le poly(alcool hydrique) est le pentaérythritol et/ou le dipentaérythritol.
Note de traduction,
Rev. 5, « molecule refrigerant » s'agit-il de « refrigerant molecule » ?
